# EUROPÄISCHE PATENTSCHRIFT

(11) **EP 1 021 487 B1**
(45) Veröffentlichungstag und Bekanntmachung des Hinweises auf die Patenterteilung: **28.11.2001**
(21) Anmeldenummer: 98951426.0
(22) Anmeldetag: 17.09.1998
(51) Int. Cl.: C08L 31/02, C09J 131/02

(54) **VERFAHREN ZUR HERSTELLUNG VON WÄSSRIGEN, SCHUTZKOLLOID-STABILISIERTEN VINYLESTER-HOMO- UND -CO-POLYMERDISPERSIONEN**
METHOD FOR PRODUCING AQUEOUS PROTECTIVE COLLOID-STABILISED VINYLESTER HOMO- AND COPOLYMER DISPERSIONS
PROCEDE POUR LA PREPARATION DE DISPERSIONS AQUEUSES D'HOMO- ET COPOLYMERES DE VINYLESTER STABILISEES PAR UN COLLOIDE PROTECTEUR

(30) Priorität: 26.09.1997 DE 19742678
(43) Veröffentlichungstag der Anmeldung: 26.07.2000
(73) Patentinhaber: Wacker-Chemie GmbH, 81737 München (DE)
(72) Erfinder: SCHILLING, Bernd, Macungie, PA 18062 (US); RIEPL, Georg, D-84547 Emmerting (DE)
(74) Vertreter: Schuderer, Michael, Dr.
(86) Internationale Anmeldenummer: EP9805919
(87) Internationale Veröffentlichungsnummer: WO9916826

(56) Entgegenhaltungen:
- WO-A-96/17897
- GB-A- 1 158 088

## Beschreibung

Die Erfindung betrifft ein Verfahren zur Herstellung von wässrigen, Schutzkolloid-stabilisierten Vinylester-Homo- und -Copolymerdispersionen mit definiertem Festgehalt.

Polyvinylalkohol-stabilisierte, wässrige Dispersionen von Vinylester-Homopolymerisaten oder Vinylester-Copolymerisaten werden vor allem als Klebemittel eingesetzt (vgl. z.B. WO-A-9 617 897). Abhängig von der Anwendung in welcher diese Dispersionen eingesetzt werden sollen werden Dispersionen mit bestimmten, definierten Festgehalten gefordert. Da der Festgehalt einer Polymerdispersion während der Polymerisation nicht exakt eingestellt werden kann, aber auch nach Abschluß der Polymerisation nur mehr durch technisch aufwendige Maßnahmen, beispielsweise die Entfernung von Wasser im Vakuum, erhöht werden kann, was durch die Verlängerung der Herstellzeiten die Herstellkosten erhöht, geht man in der Praxis so vor, daß man Polyvinylester-Dispersionen mit einem höheren als dem erforderlichen Festgehalt herstellt und die Dispersion anschließend durch Zugabe von Wasser auf den erforderlichen Festgehalt verdünnt.

Problematisch ist bei diesem "Wasserverdünnungsverfahren", daß die Viskosität von Polyvinylalkohol-stabilisierten Polyvinylester-Dispersionen im praxisrelevanten Bereich von Festgehalten zwischen 40 % und 60 % nicht linear mit dem Festgehalt ansteigt, sondern in diesem Bereich die Viskosität der Dispersionen exponentiell ansteigt. Dies hat zur Folge, daß bei der Polymerisation von Dispersionen mit höherem Festgehalt als dem später durch Wasserverdünnung einzustellenden mit relativ hochviskosen Polymerisationsansätzen polymerisiert wird. Aufgrund der höheren Viskosität wird die Wärmeabfuhr über die Reaktorwände erschwert, was die Installation von zusätzlichen Kühleinrichtungen wie Rückflußkühlern erforderlich macht, zur Wandbelagsbildung führt und darüberhinaus die Polymerisationszeiten deutlich erhöht. Ein weiterer Nachteil besteht darin, daß bei höherviskosen Dispersionen die Restmonomerentfernung erschwert wird.

Aus der DE-A 3724331 ist ein Verfahren bekannt, bei dem zur Erhöhung der Viskosität von wässrigen Polyvinylester-Dispersionen pulverförmige Copolymerisate von Vinylalkohol-1-Methylvinylalkohol-Copolymerisaten zugegeben werden. Mit diesen rheologischen Additiven läßt sich zwar die Viskosität der Dispersionen bei nahezu gleichbleibendem Feststoffgehalt deutlich erhöhen; die anwendungstechnischen Eigenschaften der Dispersionen werden durch dieses rheologische Additiv allerdings verändert. Beispielsweise wird die Wasserfestigkeit bereits durch geringe Zusätze dieser gut kaltwasserlöslichen Additive verschlechtert.

Zur Erhöhung des Festgehalts wird in einer Reihe von Patentanmeldungen, beispielsweise der EP-A 614922 (US-A 5430092), der EP-A 567812 (US-A 5340858), der EP-A 708122 und der WO-A 96/11234 vorgeschlagen, die Polymerdispersionen in Gegenwart von Saatlatices herzustellen, welche ganz oder teilweise vorgelegt werden oder vollständig dosiert werden, wobei Polymerdispersionen mit bimodaler Teilchengrößenverteilung erhalten werden. Nachteilig ist bei dieser Verfahrensweise, die überwiegend sehr komplizierte Verfahrensführung. Außerdem werden mit dieser Verfahrensweise zwar Dispersionen mit hohem Festgehalt zugänglich, dieser läßt sich aber nachträglich auch nicht mehr erhöhen.

Es bestand somit die Aufgabe, ein Verfahren zur Herstellung von wässrigen, Schutzkolloid-stabilisierten Polyvinylester-Dispersionen zur Verfügung zu stellen, mit dem Polymerdispersionen mit definiertem Festgehalt zugänglich werden, ohne daß die obengenannten Nachteile des Wasserverdünnungsverfahrens auftreten, ohne die Notwendigkeit aufwendiger Verfahrensschritte, und ohne daß die anwendungstechnischen Eigenschaften der Polymerdispersionen negativ beeinflußt werden.

Gegenstand der Erfindung ist ein Verfahren zur Herstellung von wässrigen, Schutzkolloid-stabilisierten Vinylester-Homo- und -Co-Polymerdispersionen mit definiertem Festgehalt durch Emulsionspolymerisation in Gegenwart von Schutzkolloid, dadurch gekennzeichnet, daß eine Dispersion mit niedrigerem als dem definierten Festgehalt hergestellt wird, und die Dispersion nach Abschluß der Polymerisation durch Zugabe von in Wasser redispergierbarem Polymerpulver der gleichen Polymerzusammensetzung, und hergestellt mit dem gleichen Verfahren mit anschließender Trocknung, wie das Emulsionspolymerisat auf den definierten Festgehalt verdickt wird.

Die erfindungsgemäße Verfahrensweise eignet sich zur Polymerisation von einen oder mehreren Monomeren aus der Gruppe der Vinylester von unverzweigten oder verzweigten Alkylcarbonsäuren mit 1 bis 15 C-Atomen, oder von Gemischen der genannten Vinylestermonomere mit einem oder mehreren Comonomeren aus der Gruppe der Methacrylsäureester und Acrylsäureester von unverzweigten oder verzweigten Alkoholen mit 1 bis 12 C-Atomen, der Fumarsäure- und Maleinsäuremono- oder -diester von unverzweigten oder verzweigten Alkoholen mit 1 bis 12 C-Atomen, der Diene wie Butadien oder Isopren, der Olefine wie Ethen oder Propen, der Vinylhalogenide wie Vinylchlorid.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, beispielweise VeoVa9^{R} oder VeoVa10^{R} (Handelsnamen der Fa. Shell). Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Bevorzugte Estergruppen der Fumar- und Maleinsäure sind Methyl-, Ethyl-, n-Propyl-, iso-Propyl-, n-Butyl-, iso-Butyl-, t-Butyl-, Hexyl-, Ethylhexyl-, und Dodecyl-Gruppe.

Gegebenenfalls können noch 0.05 bis 10.0 Gew%, bezogen auf das Gesamtgewicht des Monomergemisches, Hilfsmonomere copolymerisiert werden. Beispiele für Hilfsmonomere sind ethylenisch ungesättigte Carbonsäuren, vorzugsweise Acrylsäure oder Methacrylsäure; ethylenisch ungesättigte Carbonsäureamide, vorzugsweise Acrylamid; ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether, wie der Isobutoxyether, oder Ester des N-Methylolacrylamids, des N-Methylolmethacrylamids oder des N-Methylolallylcarbamats.

Beispiele für bevorzugte Vinylesterpolymerisate, welche gegebenenfalls die genannten Hilfsmonomereinheiten in den angegebenen Mengen enthalten, sind:
Vinylacetat- und Vinylpropionat-Polymerisate;
Vinylester-Ethylen-Copolymere wie Vinylacetat-Ethylen-Copolymere mit einem Ethylengehalt von 1 bis 60 Gew%;
Vinylester-Ethylen-Vinylchlorid-Copolymere mit einem Ethylengehalt von 1 bis 40 Gew% und einem Vinylchlorid-Gehalt von 20 bis 90 Gew%, wobei als Vinylester bevorzugt Vinylacetat und/oder Vinylpropionat und/oder ein oder mehrere copolymerisierbare Vinylester wie Vinyllaurat, Vinylpivalat, Vinyl-2-ethylhexansäureester, Vinylester einer alpha-verzweigten Carbonsäure, insbesondere Versaticsäurevinylester, enthalten sind;
Vinylacetat-Copolymere mit 1 bis 50 Gew% eines oder mehrerer copolymerisierbarer Vinylester wie Vinyllaurat, Vinylpivalat, Vinyl-2-ethylhexansäureester, Vinylester einer alpha-verzweigten Carbonsäure, insbesonders Versaticsäure-Vinylester (VeoVa9^{R}, VeoVa10^{R}), welche gegebenenfalls noch 1 bis 40 Gew% Ethylen enthalten;
Vinylester-Acrylsäureester-Copolymerisate mit 30 bis 90 Gew% Vinylester, insbesonders Vinylacetat, und 1 bis 60 Gew% Acrylsäureester, insbesonders n-Butylacrylat oder 2-Ethylhexylacrylat, welche gegebenenfalls noch 1 bis 40 Gew% Ethylen enthalten;
Vinylester-Acrylsäureester-Copolymerisate mit 30 bis 75 Gew% Vinylacetat, 1 bis 30 Gew% Vinyllaurat oder Vinylester einer alpha-verzweigten Carbonsäure, insbesonders Versaticsäure-Vinylester, 1 bis 30 Gew% Acrylsäureester, insbesonders n-Butylacrylat oder 2-Ethylhexylacrylat, welche gegebenenfalls noch 1 bis 40 Gew% Ethylen enthalten;
Vinylester-Copolymerisate mit Estern der Maleinsäure oder Fumarsäure wie Diisopropyl-, Di-n-butyl-, Di-t-butyl-, Di-ethylhexyl-, Methyl-t-butyl-Ester, beispielsweise Vinylacetat-Copolymerisate mit 10 bis 60 Gew% eines oder mehrerer der genannten Malein-/Fumarsäure-Ester, welche gegebenenfalls noch Ethylen oder weitere copolymerisierbare Vinylester wie Vinyllaurat oder Versaticsäure-Vinylester enthalten.

Beispiele für geeignete Schutzkolloide sind Polyvinylalkohole mit einem Gehalt von 75 bis 100 Mol%, bevorzugt 78 bis 95 Mol%, Vinylalkoholeinheiten und einer Höppler-Viskosität von 10 bis 25 mPas, Polyvinylpyrrolidone mit einem Molekulargewicht von vorzugsweise 5000 bis 400000; Polysaccharide in wasserlöslicher Form wie Stärken (Amylose und Amylopectin), Cellulosen und deren Carboxymethyl-, Methyl-, Hydroxyethyl-, Hydroxypropyl-Derivate, beispielsweise Hydroxyethylcellulosen mit einem Substitutionsgradbereich von 1.5 bis 3; Proteine wie Casein, Sojaprotein, Gelatine; Ligninsulfonate; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Am meisten bevorzugt werden teilverseifte Polyvinylalkohole mit 78 bis 95 Mol% Vinylalkoholeinheiten und einer Höppler-Viskosität von 10 bis 25 mPas (4%-ige wässrige Lösung, Methode nach Höppler gemäß DIN 53015). Die genannten teilverseiften Polyvinylalkohole können gegebenenfalls auch im Gemisch mit weiteren Schutzkolloiden aus der obengenannten Gruppe eingesetzt werden. Die Schutzkolloide werden im allgemeinen in einer Menge von 1 bis 15 Gew%, bezogen auf das Gesamtgewicht der Monomeren, eingesetzt.

Gegebenenfalls können zusätzlich zum Schutzkolloid auch Emulgatoren bei der Polymerisation verwendet werden. Die Zugabemengen betragen dann im allgemeinen 0.01 bis 1 Gew%, bezogen auf das Gesamtgewicht der Monomere. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxideinheiten.

Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Üblicherweise wird das Ansatzwasser zusammen mit dem Vinylester-Monomeranteil vollständig vorgelegt. Die Dispergiermittel, wie Schutzkolloid und gegebenfalls Emulgatoren können ganz oder teilweise vorgelegt werden.

Die Polymerisation wird vorzugsweise in einem Temperaturbereich von 40°C bis 80°C durchgeführt und mit den für die Emulsionspolymerisation üblicherweise eingesetzten Methoden eingeleitet. Bei der Copolymerisation von gasförmigen Comonomeren wie Ethylen wird unter Druck gearbeitet, vorzugsweise wird bei einem Druck von bis zu 40 bar abs. gearbeitet.

Die Initiierung erfolgt mittels der für die Emulsionspolymerisation üblichen wasserlöslichen Radikalbildner, die vorzugsweise in Mengen von 0.01 bis 1.0 Gew%, bezogen auf das Gesamtgewicht der Monomere, eingesetzt werden. Beispiele hierfür sind Ammonium- und Kaliumpersulfat, Alkylhydroperoxide, wie t-Butylhydroperoxid; Wasserstoffperoxid. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Formaldehydsulfoxylat-Salze, Natriumbisulfit oder Ascorbinsäure. Der Initiator kann ganz oder teilweise vorgelegt werden oder im Verlauf der Polymerisation kontinuierlich oder stufenweise zugegeben werden. Bei der Redoxinitiierung werden vorzugsweise eine oder beide Redox-Katalysatorkomponenten während der Polymerisation dosiert.

Der für die Polymerisation gewünschte pH-Bereich, der im Allgemeinen zwischen 3 und 7 liegt, kann in bekannter Weise durch Säuren, Basen oder übliche Puffersalze, wie Alkaliphosphate oder Alkalicarbonate, eingestellt werden. Zur Molekulargewichtseinstellung können bei der Polymerisation die üblicherweise verwendeten Regler, zum Beispiel Mercaptane, Aldehyde und Chlorkohlenwasserstoffe, zugesetzt werden.

Nach Abschluß der Polymerisation kann die Dispersion zur weiteren Reduzierung des Gehalts an flüchtigen Bestandteilen destilliert werden oder mit Dampf oder Inertgas gestrippt werden. Diese Verfahrensweisen sind dem Fachmann bekannt und bedürfen daher keiner weiteren Erläuterung.

Die Polymerisation wird im allgemeinen so durchgeführt, daß ein Feststoffgehalt von 30 bis 65 Gew%, vorzugsweise 40 bis 50 Gew% resultiert. Die Höhe des nach Abschluß der Polymerisation angestrebten Feststoffgehalts hängt dabei von der Viskosität der resultierenden Dispersion ab, welche einen Wert von 10000 bis 15000 mPas (Brookfield-Viskosität bei 20 U) nicht überschreiten sollte.

Das in Wasser redispergierbare Polymerpulver, welches der Polymerdispersion zur Erhöhung des Feststoffgehalts zugegeben wird, hat die gleiche Zusammensetzung wie das Polymerisat der wässrigen Polymerdispersion und wird mit dem gleichen Verfahren hergestellt. Die Trocknung der so erhaltenen Dispersion kann mittels Sprühtrocknung, Gefriertrocknung oder Wirbelschichttrocknung erfolgen. Bevorzugt wird die Sprühtrocknung in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 65°C bis 90°C, je nach Anlage, Tg des Harzes und gewünschtem Trocknungsgrad gewählt.

Gegebenenfalls können der Dispersion zur Sprühtrocknung ein oder mehrere der obengenannten, bei der Polymerisation verwendeten, Schutzkolloiden als Verdüsungshilfe zugegeben werden. Bevorzugt werden bei diesem Verfahrensschritt 5 bis 20 Gew% Schutzkolloid zugesetzt.

Das in Wasser redispergierbare Polymerpulver wird mittels herkömmlicher Mischrührwerke in die wässrige Dispersion eingerührt. Die Zugabemenge richtet sich dabei nach dem angestrebten Festgehalt. Im allgemeinen werden Festgehalte von 50 bis 75 Gew%, vorzugsweise 50 bis 65 Gew% eingestellt. Die Viskosität der Dispersionen beträgt dabei von 20000 bis 60000 mPas (Brookfield-Viskosität bei 20 U).

Die erfindungsgemäß hergestellten Dispersionen eignen sich als Klebemittel zum Verkleben poröser Substrate wie Holz, Pappe und Papier. Besonders geeignet sind die Klebstoffdispersionen als Holzklebstoffe, Parkettklebstoffe, Verpackungsklebstoffe und Buchbindeklebstoffe.

Für diese Anwendungen können die Klebstoffdispersionen mit den entsprechenden Zusatzstoffen modifiziert werden. Geeignete Zusatzstoffe sind Füllstoffe wie Kreide oder Gips. Weiter können der Klebstoffdispersion Netzmittel, Dispergiermittel, Verdikker, Entschäumer und/oder Konservierungsstoffe zugegeben werden.

Speziell für die Anwendung als Holzklebemittel können zur Erhöhung der Kalt- und Heißwasserfestigkeit die dafür üblichen Vernetzungsmittel, beispielweise wasserlösliche Metallsalze von einbasigen Säuren wie Al(III) - und Zr(IV)-Salze, zugegeben werden. Bevorzugt werden Aluminiumchlorid und Aluminiumnitrat zugegeben.

Mit dem erfindungsgemäßen Vorgehen werden Dispersionen mit hohem Festgehalt zugänglich, ohne daß die Nachteile der Verfahren aus dem Stand der Technik wie lange Polymerisationszeiten, komplizierte Verfahrensführung auftreten. Die anwendungstechnischen Eigenschaften der Dispersionen werden durch die erfindungsgemäße Verfahrensweise nicht negativ beeinflußt. Vor allem die drastische Verkürzung der Polymerisationzeit bringt erhebliche wirtschaftliche Vorteile.

Die nachfolgenden Beispiele dienen zur weiteren Erläuterung der Erfindung:

### Vergleichsbeispiel 1:

### (Herstellung einer Dispersion mit 50 Gew% Festgehalt nach dem Wasserverdünnungsverfahren)

In einem 120 l-Reaktor mit automatischen Dosiervorrichtungen, Temperaturregelung, Ankerrührwerk, Mantelwärmeabfuhrsystem und Rückflußkühler wurden 25 kg Vinylacetat in 50 l einer wässrigen 10%-igen Polyvinylalkohollösung einemulgiert. Der Polyvinylalkohol hatte einen Hydrolysegrad von 88 Mol% und eine Viskosität von 26 mPas (4%-ige wässrige Lösung). Danach wurde auf 60°C erwärmt und die Polymerisation mit dem Initiatorsystem Ascorbinsäure/Ammoniumpersulfat gestartet, wobei parallel mit der Initiatordosierung 0.1% Acetaldehyd als 10%-ige wässrige Lösung dosiert wurden. Circa 10 Minuten nach dem Anspringen der Polymerisation kam das Vinylacetat/Wasser-Azeotrop zum Sieden, wobei die Temperaturregelung und die Initiatordosierung so gesteuert wurden, daß sich ein mäßiger Rückfluß des Azeotrops über den Rückflußkühler einstellte. Danach wurden weitere 30 kg Vinylacetat so zudosiert, daß der mäßige Rückfluß des Azeotrops erhalten blieb. Nach ca. 6 Stunden Reaktionszeit war die Polymerisation beendet.
Die resultierende Dispersion hatte einen Festgehalt von ca. 57% und eine Brookfield-Viskosität von ca. 60000 mPas bei 20 U. Zur Einstellung des angestrebten Festgehalts von 50% wurde die Dispersion mit 15 1 Wasser verdünnt. Es wurde eine Disper-sion mit einem Festgehalt von 50% und einer Brookfield-Viskosität von 15000 mPas bei 20 U erhalten.

### Beispiel 1:

### (Herstellung einer Dispersion mit 50 Gew% Festgehalt nach dem Pulververdickungsverfahren)

Wie in Vergleichsbeispiel 1 wurden in einem 120 l-Reaktor mit automatischen Dosiervorrichtungen, Temperaturregelung, Ankerrührwerk, Mantelwärmeabfuhrsystem und Rückflußkühler 25 kg Vinylacetat in 50 l einer wässrigen 10%-igen Polyvinylalkohollösung einemulgiert. Der Polyvinylalkohol hatte einen Hydrolysegrad von 88 Mol% und eine Viskosität von 26 mPas (4%-ige wässrige Lösung). Danach wurde auf 60°C erwärmt und die Polymerisation mit dem Initiatorsystem Ascorbinsäure/Ammoniumpersulfat gestartet, wobei parallel mit der Initiatordosierung 0.1% Acetaldehyd als 10%-ige wässrige Lösung dosiert wurden. Circa 10 Minuten nach dem Anspringen der Polymerisation kam das Vinylacetat/Wasser-Azeotrop zum Sieden, wobei die Temperaturregelung und die Initiatordosierung so gesteuert wurden, daß sich ein mäßiger Rückfluß des Azeotrops über den Rückflußkühler einstellte. Im Unterschied zur Vorgehensweise von Vergleichsbeispiel 1 wurden danach 30 kg Vinylacetat zusammen mit 20 l Wasser so zudosiert, daß der mäßige Rückfluß des Azeotrops erhalten blieb. Die Reaktionszeit verkürzte sich dabei auf 3 Stunden.
Die resultierende Dispersion hatte einen Festgehalt von ca. 48% und eine Brookfield-Viskosität von ca. 10000 mPas bei 20 U.
Zur Einstellung des angestrebten Festgehalts von 50% wurden der Dispersion 5 kg eines Dispersionspulvers zugegeben, welches durch Sprühtrocknung einer wässrigen Polymerdispersion erhalten wurde, welche mit dem gleichen Verfahren hergestellt worden war. Zur Herstellung des Dispersionspulvers wurde die Polyvinylacetat-Dispersion auf einen Festgehalt von 35% verdünnt. Die Trocknung erfolgte in einem Nubilosa-Sprühtrockner bei einer Austrittstemperatur von 82°C und einem Preßluftdruck vor der 2-Stoffdüse von 4 bar.
Nach Zugabe des Dispersionspulvers wurde eine Dispersion mit einem Festgehalt von 50% und einer Brookfield-Viskosität von 15000 mPas bei 20 U erhalten.

### Anwendungstechnische Prüfung:

Die mit den Verfahren gemäß Vergleichsbeispiel 1 und Beispiel 1 erhaltenen Dispersionen wurden auf deren Eignung als Holzklebemittel geprüft. Dazu wurden die Klebefestigkeit gemäß DIN EN 204/205 und die Wärmefestigkeit der Verklebungen nach WATT 91 bestimmt.

### Klebefestigkeit nach DIN EN 204/205:

Die Probekörper wurden gemäß DIN EN 205 hergestellt. Hierzu wurden jeweils zwei je 5 mm dicke, 130 mm breite und 600 mm lange Buchenholzplatten mit der zu testenden Klebemittel-Dispersion unter gleichmäßig über die Klebefläche verteiltem Druck miteinander verklebt, die verklebten Platten in jeweils 150 mm lange Prüfkörper aufgeteilt und diese gemäß DIN EN 204 gelagert.
Für die Prüfung zur Zuordnung in die Beanspruchungsgruppe D2 wurden die Probekörper nach der Verleimung 7 Tage bei Normalklima (23°C, 50% Luftfeuchtigkeit), anschließend 3 Stunden in 23°C kaltem Wasser und schließlich wieder 7 Tage bei Normalklima gelagert.
Nach der Lagerung wurde mit den Prüfkörpern die Klebefestigkeit im Zug-Scher-Versuch ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt. Die Klebefestigkeit T errechnet sich gemäß DIN EN 205 aus T = F_{Max}/A, wobei A die geklebte Prüffläche in mm² ist.
Die Ergebnisse der Prüfung der Klebefestigkeit sind in Tabelle 1 zusammengefaßt.

### Prüfung der Wärmefestigkeit nach WATT 91:

Die Probekörper wurden gemäß EN 205 hergestellt und aufgeteilt und 7 Tage bei Normklima gelagert. Danach wurden diese in einem auf 80°C vorgeheizten Wärmeschrank bei einer Temperatur von 80°C 1 Stunde lang gelagert. Unmittelbar nach der Wärmelagerung wurde die Wärmefestigkeit im Zug-Scher-Versuch analog DIN EN 205 ermittelt, wobei mit einer Zugprüfmaschine mit 50 mm/min Abzugsgeschwindigkeit die verklebten Prüfkörper auseinandergezogen und bis zum Bruch belastet wurden. Beim Bruch wurde die dabei auftretende Maximalkraft F_{Max} ermittelt.
Die Wärmefestigkeit errechnet sich aus F_{Max}/A, wobei A die geklebte Prüffläche in mm² ist.

Die Ergebnisse der Prüfung der Wärmefestigkeit sind ebenfalls in Tabelle 1 zusammengefaßt.

**Tabelle 1:**

| Beispiel | Vergleichsbeispiel 1 | Beispiel 1 |
|---|---|---|
| Klebefestigkeit (N/mm²) D2-Wert | 9.5 | 9.5 |
| Wärmefestigkeit (N/mm²) | 7.0 | 7.0 |

## Patentansprüche

1. Verfahren zur Herstellung von wässrigen, Schutzkolloid-stabilisierten Vinylester-Homo- und -Co-Polymerdispersionen mit definiertem Festgehalt durch Emulsionspolymerisation in Gegenwart von Schutzkolloid, **dadurch gekennzeichnet, daß** eine Dispersion mit niedrigerem als dem definierten Festgehalt hergestellt wird, und die Dispersion nach Abschluß der Polymerisation durch Zugabe von in Wasser redispergierbarem Polymerpulver der gleichen Polymerzusammensetzung, und hergestellt mit dem gleichen Verfahren mit anschließender Trocknung, wie das Emulsionspolymerisat auf den definierten Festgehalt verdickt wird.

2. Verfahren nach Anspruch 1, **dadurch gekennzeichnet, daß** die Polymerisation bis zu einem Festgehalt von 30 bis 65 Gew% und einer Viskosität der resultierenden Dispersion von 10000 bis 15000 mPas (Brookfied-Viskosität bei 20 U) durchgeführt wird und auf einen Festgehalt von 50 bis 75 Gew% und eine Viskosität der Disper-sion von 20000 bis 60000 mPas (Brookfied-Viskosität bei 20 U) verdickt wird.

3. Verfahren nach Anspruch 1 und 2, **dadurch gekennzeichnet, daß** in Gegenwart von Polyvinylalkohol mit einem Gehalt von 75 bis 100 Mol% Vinylalkoholeinheiten und einer Höppler-Viskosität von 10 bis 25 mPas (4%-ige wässrige Lösung Methode nach Höppler gemäß DIN 53015) als Schutzkolloid polymerisiert wird.

## Claims

1. Process for preparing aqueous, protective colloid stabilized vinyl ester homopolymer and copolymer dispersions of defined solids content by emulsion polymerization in the presence of protective colloid, **characterized in that** it comprises preparing a dispersion with a solids content lower than the defined solids content and, after the end of the polymerization, thickening the dispersion to the defined solids content by adding water-redispersible polymer powder of the same polymer composition, and prepared with the same process with subsequent drying, as the emulsion polymer.

2. Process according to Claim 1, **characterized in that** the polymerization is conducted to a solids content of from 30 to 65% by weight and to a viscosity of the resulting dispersion of from 10,000 to 15,000 mPas (Brookfield viscosity at 20 r) and thickening is carried out to a solids content of from 50 to 75% by weight and a viscosity of the dispersion of from 20,000 to 60,000 mPas (Brookfield viscosity at 20 r).

3. Process according to Claim 1 and 2, **characterized in that** polymerization is carried out in the presence of polyvinyl alcohol having a content of from 75 to 100 mol% of vinyl alcohol units and a Höppler viscosity from 10 to 25 mPas (4% strength aqueous solution, method of Höppler in accordance with DIN 53015) as protective colloid.

## Revendications

1. Procédé pour la préparation de dispersions aqueuses d'homopolymères et de copolymères d'esters vinyliques stabilisées par des colloïdes protecteurs, ayant une teneur définie en matières solides, en présence de colloïde protecteur, **caractérisé en ce qu'**on prépare une dispersion à plus faible teneur en matières solides que la teneur définie, et une fois terminée la polymérisation, on épaissit la dispersion à la teneur désirée en matières solides, par addition de poudre de polymère dispersable dans l'eau, ayant la même composition de polymère, et préparée par le même procédé avec séchage subséquent, que le polymère en émulsion.

2. Procédé selon la revendication 1, **caractérisé en ce que** la polymérisation est effectuée jusqu'à une teneur en matières solides de 30 à 65 % en poids et une viscosité de la dispersion résultante de 10 000 à 15 000 mPa.s (viscosité Brookfield à 20 tours), et la dispersion est épaissie jusqu'à une teneur en matières solides de 50 à 75 % en poids et une viscosité de 20 000 à 60 000 mPa.s (viscosité Brookfield à 20 tours).

3. Procédé selon la revendication 1 et la revendication 2, **caractérisé en ce qu'**on effectue la polymérisation en présence de poly(alcool vinylique) ayant une teneur en motifs alcool vinylique de 75 à 100 % en moles et une viscosité Höppler de 10 à 25 mPa.s (méthode en solution aqueuse à 4 % selon Höppler, conformément à DIN 53015), en tant que colloïde protecteur.
